# EUROPÄISCHE PATENTSCHRIFT

(11) **EP 2 707 408 B1**
(45) Veröffentlichungstag und Bekanntmachung des Hinweises auf die Patenterteilung: **08.07.2015**
(21) Anmeldenummer: 12722322.0
(22) Anmeldetag: 10.05.2012
(51) Int. Cl.: C08G 18/32, C08G 18/36, C08G 18/66, C09D 175/14

(54) **RADSÄTZE FÜR SCHIENENGEBUNDENE FAHRZEUGE ODER DEREN TEILE UND VERFAHREN ZUM BESCHICHTEN**
WHEELSETS FOR RAIL VEHICLES OR PARTS OF WHEELSETS FOR RAIL VEHICLES AND METHOD FOR COATING
ESSIEUX MONTÉS POUR VÉHICULES FERROVIAIRES OU LEURS PIÈCES ET PROCÉDÉ DE REVÊTEMENT

(30) Priorität: 10.05.2011 US 201161484274 P; 10.05.2011 EP 11165574
(43) Veröffentlichungstag der Anmeldung: 19.03.2014
(73) Patentinhaber: BASF Coatings GmbH, 48165 Münster (DE)
(72) Erfinder: KLAUER, Jens, 22143 Hamburg (DE); WARNTJES, Egon, 26123 Oldenburg (DE); BUCK, Klaus, 27607 Langen (DE); HÖGELE, Eugen, 55232 Alzey (DE); GAST, Achim, 48324 Sendenhorst (DE)
(74) Vertreter: Leifert & Steffan
(86) Internationale Anmeldenummer: PCT/EP2012/058650
(87) Internationale Veröffentlichungsnummer: WO 2012/152870

(56) Entgegenhaltungen:
- EP-A1- 0 568 388
- WO-A1-2007/050000
- DE-C1- 4 320 549

## Beschreibung

Die vorliegende Erfindung betrifft ein 2-Komponenten-Polyurethanbeschichtungsmaterial zur Beschichtung von Radsätzen für schienengebundene Fahrzeuge oder deren Teile.

Radsätze von schienengebundenen Fahrzeugen müssen vor Korrosion geschützt werden. Unter Radsätzen sind die Räder und die Achsen einschließlich der Drehgestelle und Untergestelle der schienengebundenen Fahrzeuge zu verstehen. Bevorzugt werden in Rahmen der vorliegenden Erfindung unter Radsätzen die Räder und Achsen der schienengebundenen Fahrzeuge verstanden. Im Personen- und insbesondere im Hochgeschwindigkeitsverkehr sind die genannten Teile nicht nur vor Witterungseinflüssen zu schützen, sondern diese Teile unterliegen auch einer hohen mechanischen Beanspruchung durch auffliegende Schottersteine oder dergleichen. Die Beschichtungen müssen also sehr widerstandsfähig und zähelastisch sein, um eine Beschädigung der Radsätze durch die genannten auffliegenden Schottersteine zu vermeiden. Es ist bekannt, zum Schlagschutz 2-Komponenten-Polyurethanmassen auf die Radsätze aufzubringen (5. Fachtagung ZfP im Eisenbahnwesen, 4.-6. März 2008 Wittenberge). Die dort offenbarten Schlagschutzbeschichtungen werden in einer Schichtdicke von mindestens 6 mm aufgebracht.

Demgegenüber ist im Güterverkehr besonders Korrosionsschutz und Schutz gegen mechanische Belastung relevant. Auch muss im Güterverkehr die Thermosensibilität der Beschichtung visuell wahrnehmbar sein. Ferner wird angestrebt, dass die Beschichtung lärmreduzierend wirkt.

WO 2007/050000 beschreibt eine Polyurethanbeschichtungszusammensetzung, die Rizinusöl, Polyetherpolyol (Molekulargewicht 400), einen Polyurethankatalysator und Polyisocyanat enthält. Diese Beschichtungen zeigen Korrosionsschutz und Schutz gegen mechanische Belastung.

In EP 0 568 388 werden Polyurethan-Beschichtungszusammensetzungen beschrieben, die Rizinusöl, Polyamin, Polyurethankatalysatoren und Polyisocyanat enthalten.

Da die bisher bekannten Beschichtungen keine zufrieden stellenden Ergebnisse zeigen, ist es Aufgabe der vorliegenden Erfindung, den Korrosionsschutz und den Schlagschutz derartiger Beschichtungen weiter zu verbessern. Insbesondere soll auch eine Ultraschallprüfung der Radsätze durch die Beschichtung hindurch möglich sein.

Die genannten Aufgaben werden bei Radsätzen und deren Teilen der eingangs genannten Art dadurch gelöst, dass die Beschichtung durch Aufbringen und Ausreagieren einer Beschichtungsmasse hergestellt wurde, die folgende Bestandteile enthält:

### Komponente A, enthaltend

a1) 18 bis 30 Gew.-% eines Polyetherpolyols mit einer nach ASTM D1209 bestimmten Hydroxylzahl von 300 bis 500, bevorzugt 320 bis 450 und besonders bevorzugt 360 bis 400 mg KOH/g,
a2) 38 bis 60 Gew.-% Rizinusöl,
a3) 0,6 bis 2,0 Gew.-% mindestens eines Di- oder Polyamins, bevorzugt mindestens eines aromatischen Diamins und besonders bevorzugt Diethyltoluoldiamin,
a4) 5,6 bis 9,0 Gew.-% Trizinkbis(orthophosphat),
a5) 2,2 bis 3,5 Gew.-% Zinkoxid und/oder Zinkphosphat, bevorzugt Zinkoxid,
a6) 0,05 bis 0,4 Gew.-% eines die Urethanbildung katalysierenden Katalysators, wobei die gewichtsprozentualen Angaben auf die Gesamtmasse der Beschichtungsmasse bezogen sind,
   und
   als Komponente B ein oder mehrere Di- und/oder Polyisocyanate in einer Menge, die einem Molverhältnis der Isocyanat-Gruppen zu den Hydroxylgruppen der Bestandteile a1) und a2) von 0,6:1 bis 1,2:1, bevorzugt 0,7:1 bis 1,1:1, besonders bevorzugt 0,8:1 bis 1,1:1 und ganz besonders bevorzugt von 0,9:1 bis 1,1:1 entspricht.

Bei dem Polyetherpolyol a1) handelt es sich um solche Polyole mit der genannten OH-Zahl mit einer Funktionalität an Hydroxygruppen von mindestens 2, bevorzugt von 2 bis 6, besonders bevorzugt 2 bis 4 und ganz besonders bevorzugt von etwa 3.

Bevorzugt handelt es sich dabei um mit Ethylenoxid und/oder Propylenoxid, besonders bevorzugt nur Propylenoxid alkoxylierte Polyalkohole mit einer entsprechenden Funktionalität. Ganz besonders bevorzugt handelt es sich bei den Polyalkoholen um Trimethylolpropan oder Glycerin, insbesondere um Glycerin.
In einer bevorzugten Ausführungsform handelt es sich bei der Verbindung a2) um Rizinusöl mit einer OH-Zahl von mehr als 150 mg KOH/g, besonders bevorzugt mindestens 160 bis 180 und ganz besonders bevorzugt 160 bis 168 mg KOH/g.

Als Rizinusöl im Rahmen der vorliegenden Schrift wird dabei bevorzugt ein überwiegend, d.h. zu mindestens 50 Gew.-%, bevorzugt zu mindestens 60 und besonders bevorzugt zu mindestens 75 Gew.-%, aus zumindest teilweise, bevorzugt vollständig verestertem Acylglycerol bestehendes Gemisch bezeichnet, von deren Acylgruppen es sich zumindest bei einer, bevorzugt bei mindestens zweien um Ricinolsäure oder Isoricinolsäure, bevorzugt Ricinolsäure handelt. Bei den weiteren Acylgruppen kann es sich beispielsweise um Ölsäure, Linolsäure, Palmitinsäure und/oder Stearinsäure handeln.

Bei der Verbindung a3) handelt es sich um mindestens ein Di- oder Polyamin, bevorzugt sind aromatische Diamine als Verbindungen a3) und besonders bevorzugt handelt es sich um Diethyltoluoldiamin und/oder Dimethylthiotoluoldiamin, ganz besonders bevorzugt um Diethyltoluoldiamin.

Vorteilhaft enthält die Beschichtungsmasse optional als weiteren Bestandteil a7) der Komponente A 14,5 bis 17,5 Gew.-% eines Copolymerisats ungesättigter aromatischer C₉/C₁₀-Kohlenwasserstoffe mit Phenol. In einer bevorzugten Ausführungsform handelt es ich dabei um phenolgruppenhaltige Copolymere, die α-Methylstyrol in einpolymeriserter Form enthalten. Derartige Produkte sind beispielsweise unter der CAS-Nr. [68512-30-1] bekannt. Durch den Bestandteil a7) wird eine Hydrophobierung der Beschichtung erreicht, die den Korrosionsschutz und den Schutz vor Witterungseinflüssen weiter verbessert.

Vorteilhaft enthält die Beschichtungsmasse optional als weiteren Bestandteil a8) 3,5 bis 6,5 Gew.-% Zeolit. Dieser Bestandteil weist vorteilhaft eine Porenweite von 3 bis 4 Ä, bevorzugt 3 bis 3,5 Å und besonders bevorzugt von etwa 3 Ä auf. Er dient als Wasserfänger und durch ihn werden geringe Anteile von Wasser in der Beschichtungsmasse gebunden.

Die Beschichtungsmasse kann optional vorteilhaft 2,5 bis 6,5 Gew.-% Pigmente und/oder Füllstoffe a9) enthalten. Durch farbgebende Pigmente kann den Beschichtungsmassen im ausgehärteten Zustand ein attraktives Aussehen verliehen werden. Durch Pigmente und Füllstoffe werden auch die mechanischen Eigenschaften der ausgehärteten Beschichtungsmassen verbessert. Als Pigmente können die üblichen in der Beschichtungsindustrie eingesetzten anorganischen oder organischen Pigmente verwendet werden, beispielsweise Eisenoxid, Titandioxid und dergleichen. Ferner kann Ruß als Farbmittel eingesetzt werden.

Des Weiteren kann die Beschichtungsmasse als weiteren Bestandteil der Komponente A zusätzlich 2 bis 2,5 Gew.-% Entschäumer und/oder Verlaufshilfsmittel a10) enthalten.

Als Vernetzer werden bekanntermaßen bei Polyurethanbeschichtungen Di- und/oder Polyisocyanate eingesetzt. Bei der vorliegenden Erfindung ist es vorteilhaft, dass die vernetzende Komponente B 2,4- und/oder 2,6-Toluylendiisocyanat (TDI), o-, m- öder p-Xylendiisocyanat (XDI), 1,5- oder 1,8-Naphtyldiisocyanat (NDI), 2,4- und/oder 4,4-Diphenylmethandiisocyanat, bevorzugt 2,4- und/oder 4,4-Diphenylmethandiisocyanat enthält oder hieraus besteht.

Die Komponente B wird in einer solchen Menge eingesetzt, dass ein Molverhältnis der Isocyanat-Gruppen zu den Hydroxylgruppen der Bestandteile a1) und a2) von 0,6:1 bis 1,2:1, bevorzugt 0,7:1 bis 1,1:1, besonders bevorzugt 0,8:1 bis 1,1:1 und ganz besonders bevorzugt von 0,9:1 bis 1,1:1 resultiert.

Dies entspricht beispielsweise einem Gewichtsverhältnis der Komponente A zur Komponente B von 3:1 bis 2:1, bevorzugt von etwa 2,5:1 (jeweils frei von Lösemitteln). Demnach werden die Komponenten A und B in besonders bevorzugten Ausführungsformen der vorliegenden Erfindung in einem Gewichtsverhältnis von 3:1 bis 2:1, ganz besonders bevorzugt von etwa 2,5:1, (jeweils frei von Lösemitteln) eingesetzt.

Der in der Beschichtungsmasse anwesende Katalysator a6) dient der Beschleunigung der Reaktion der Isocyanat-Gruppen mit den Hydroxylgruppen. Vorteilhaft werden Katalysatoren auf Basis Zinn, Zink, Zirkon oder Bismuth eingesetzt, bevorzugt Dibutylzinndilaurat.

Die Erfindung betrifft auch ein Verfahren zum Beschichten von Radsätzen oder deren Teilen durch Aufbringen und Härten einer 2-Komponenten-Polyurethanbeschichtungsmasse. Das erfindungsgemäße Verfahren ist dadurch gekennzeichnet, dass die Beschichtungsmasse folgende Bestandteile enthält: Komponente A, enthaltend
a1) 18 bis 30 Gew.-% eines Polyetherpolyols mit einer nach ASTM D1209 bestimmten Hydroxylzahl von 300 bis 500, bevorzugt 320 bis 450 und besonders bevorzugt 360 bis 400 mg KOH/g,
a2) 38 bis 60 Gew.-% Rizinusöl,
a3) 0,6 bis 2,0 Gew.-% mindestens eines Di- oder Polyamins, bevorzugt mindestens eines aromatischen Diamins und besonders bevorzugt Diethyltoluoldiamin,
a4) 5,6 bis 9,0 Gew.-% Trizinkbis(orthophosphat),
a5) 2,2 bis 3,5 Gew.-% Zinkoxid oder Zinkphosphat, bevorzugt Zinkoxid,
a6) 0,05 bis 0,4 Gew.-% eines die Urethanbildung katalysierenden Katalysators, wobei die gewichtsprozentualen Angaben auf die Gesamtmasse der Beschichtungsmasse bezogen sind, und
   als Komponente B ein oder mehrere Di- und/oder Polyisocyanate in einer Menge, die einem Molverhältnis der Isocyanat-Gruppen zu den Hydroxylgruppen der Bestandteile a1) und a2) von 0,6:1 bis 1,2:1, bevorzugt 0,7:1 bis 1,1:1, besonders bevorzugt 0,8:1 bis 1,1:1 und ganz besonders bevorzugt von 0,9:1 bis 1,1:1 entspricht.

In einer vorteilhaften Ausführungsform der vorliegenden Erfindung wird vor dem Aufbringen der erfindungsgemäßen Zweikomponenten-Polyurethanbeschichtungsmasse auf den Untergrund, bevorzugt die metallische Oberfläche, mindestens eine Haftgrundierung aufgetragen.

Bei der metallischen Oberfläche auf die die Beschichtungsmasse aufgetragen wird, handelt es sich bevorzugt um Stahl, der gedreht oder gestrahlt ist. Es ist ein Vorteil der erfindungsgemäßen Beschichtungsmasse, dass sie auf beiden Arten von Oberflächen gute Haftung zeigt, wobei bei einer Oberfläche mit einer Oberflächenrauigkeit von nicht mehr als 6 Mikrometer der Einsätz mindestens einer Haftgrundierung bevorzugt ist.

Bevorzugte Haftgrundierungen sind solche, die auf gedrehten Oberflächen eine gute Haftung zeigen, insbesondere mehr als 5 MPa im Haftungstest (Abreißversuch).

Die Haftgrundierung wird in einer Trockenschichtdicke von bevorzugt 20 bis 30 µm aufgetragen und die erfindungsgemäße Zweikomponenten Polyurethanbeschichtungsmasse wird vor Beendigung des Überstreichbarkeitsintervalls der Haftgrundierung aufgetragen.

Das Aufbringen der erfindungsgemäßen Beschichtungsmasse auf die Radsätze erfolgt bevorzugt in einer Zweikomponenten Heißspritzanlage im angegebenen Mischungsverhältnis unter Erwärmen der Beschichtungsmasse auf Temperaturen um 40 °C.

Die Beschichtungsmasse wird nach dem Aufbringen bevorzugt bei Umgebungstemperatur bis 40 °C ausreagiert, besonders bevorzugt bei 10 bis 30 °C. Die Beschichtung ist in der Regel nach bis zu 30 Minuten handtrocken und nach bis zu 3 Stunden transportfähig.

Produkte des Standes der Technik sind oftmals erst nach 24 Stunden Härtung transportfähig. Bei niedrigen Temperaturen ist zur Härtung zusätzlich noch ein Erwärmen erforderlich.

Vorteilhafte Ausführungen des erfindungsgemäßen Verfahrens ergeben sich aus den Unteransprüchen 9 bis 14.

Die Trockenfilmdicke beträgt beispielsweise 1 bis 6 Millimeter, bevorzugt 2 bis 3 Millimeter. Der bevorzugte Trockerifilmdickenbereich von 2 bis 3 Millimetern ist insbesondere für Anwendungen im Güterverkehr geeignet, sodass insbesondere für solche Anwendungen Beschichtungen mit entsprechender Schichtdicke hergestellt werden. Für Anwendungen im Personenverkehr ist eine Trockenfilmdicke von mehr als 3 Millimetern bevorzugt.
Durch die Erfindung wird ein sehr guter Korrosionsschutz in Verbindung mit einer hohen mechanischen Belastbarkeit der Radsätze und deren Teile erreicht. Außerdem wird ein sehr guter Schallschutz erzielt. Der sehr gute Schallschutz zeigt sich insbesondere in einer Verringerung der Lärmemissionen um bis zu 2,4 dB(A).

Es hat sich ferner gezeigt, dass die erfindungsgemäßen Beschichtungsmassen in Entflammbarkeitstests aus der DIN 5510 selbstverlöschend innerhalb von 4 Sekunden sind und keine brennenden Bestandteile abfallen.

Des Weiteren zeigen die erfindungsgemäßen Beschichtungsmassen ein potentielles Heißlaufen der beschichteten Radsätze durch einen deutlich sichtbaren Farbabbrand bei Temperaturen oberhalb von 280 °C an.

Durch die mit den erfindungsgemäßen Beschichtungsmassen erhaltene Beschichtung ist eine zerstörungsfreie Untersuchung per Ultraschall grundsätzlich möglich.

Sollte ein Entfernen der Beschichtung gewünscht sein, so kann dies durch Hochdruckwasserstrahlen erfolgen. Gegenüber dem abrasiven Strahlen wird eine unversehrte Oberfläche erhalten und es fällt kein durch die Beschichtung kontaminiertes Strahlmittel an, das aufwendig entsorgt werden müsste.

Im Folgenden wird die Erfindung anhand eines Ausführungsbeispiels näher erläutert.

### Beispiel:

Es wurde eine Komponente A durch Mischen der folgenden Bestandteile in den angegebenen Mengenverhältnissen hergestellt:

### Komponente A

| **Stoff** | **Menge** |
|---|---|
| Polyetherpolyol verzweigt (CARADOL® ET380-02, Shell Chemicals) | 21,400 |
| Rizinusöl | 42,530 |
| Diethyltoluoldiamin (ETHACURE® 100 Curative (ALBEMARLE Corporation)) | 0,670 |
| Phenol-modifiziertes Kohlenwasserstoffharz (NOVARES® LA 700, Rütgers Chemicals) | 16,200 |
| Zeolit | 5,000 |
| Trizinkbis(orthophosphat) | 6,300 |
| Zinkoxid | 2,450 |
| Dibutylzinndilaurat | 0,250 |
| Eisenoxid | 0,700 |
| Titanoxid | 0,150 |
| Eisen(III)oxid | 2,200 |
| Additive: | |
| Handelsüblicher Entschäumer | 1,000 |
| Handelsübliches Verlaufsadditiv | 1,150 |

Die genannte Komponente A wurde mit 2,4-/4,4-Diphenylmethandiisocyanat als Komponente B in einem Gewichtsverhältnis A:B = 2,5:1 in einer 2K-Airless Heißspritzanlage gemischt und auf Radsätze aufgetragen. Die Trockenfilmdicke betrug 2500 Mikrometer (Beispiel 1 a).

Weiterhin wurden Radsätze wie unter Beispiel 1 a beschichtet, wobei die Radsätze vor dem Auftrag der Zweikomponenten Polyurethan Beschichtungsmasse mit 25 Mikrometer OLDOPOX® ZM als Haftvermittler beschichtet wurden; die Beschichtung mit der Zweikomponenten Polyurethan Beschichtungsmasse erfolgte innerhalb des Überstreichbarkeitsintervalls gemäß technischem Merkblatt (Beispiel 1 b).

Eine Schallmessung an den gemäß Beispiels 1b beschichteten Radsätzen nach TSI Noise zeigte eine Verringerung des Lärmemission um 2,4 dB(A).

## Patentansprüche

1. Mit einer gehärteten, aus einem 2-Komponenten-Polyurethanbeschichtungsmaterial hergestellten Beschichtung versehene Radsätze für schienengebundene Fahrzeuge oder deren Teile, **dadurch gekennzeichnet, dass** die Beschichtung durch Aufbringen und Aushärten einer Beschichtungsmasse hergestellt wurde, die folgende Bestandteile enthält:
Komponente A, enthaltend
a1) 18 bis 30 Gew.-% eines Polyetherpolyols mit einer nach ASTM D1209 bestimmten Hydroxylzahl von 300 bis 500 mg KOH/g,
a2) 38 bis 60 Gew.-% Rizinusöl,
a3) 0,6 bis 2,0 Gew.-% mindestens eines Di- oder Polyamins,
a4) 5,6 bis 9,0 Gew.-% Trizinkbis(orthophosphat),
a5) 2,2 bis 3,5 Gew.-% Zinkoxid und/oder Zinkphospat,
a6) 0,05 bis 0,4 Gew.-% eines die Urethanbildung katalysierenden Katalysators,
wobei die gewichtsprozentualen Angaben auf die Gesamtmasse der Beschichtungsmasse bezogen sind, und
als Komponente B ein oder mehrere Di- und/oder Polyisocyanate in einer Menge, die einem Molverhältnis der Isocyanat-Gruppen zu den Hydroxylgruppen der Bestandteile a1) und a2) von 0,6:1 bis 1,2:1 entspricht.

2. Radsätze oder deren Teile nach Anspruch 1, **dadurch gekennzeichnet, dass** die Beschichtungsmasse als weiteren Bestandteil der Komponente A
a7) 14,5 bis 17,5 Gew.-% eines Copolymerisats ungesättigter aromatischer C₉/C₁₀-Kohlenwasserstoffe mit Phenol enthält.

3. Radsätze oder deren Teile nach Anspruch 1 oder 2, **dadurch gekennzeichnet, dass** die Beschichtungsmasse als weiteren Bestandteil der Komponente A
a8) 3,5 bis 6,5 Gew.-% Zeolit enthält.

4. Radsätze oder deren Teile nach Anspruch 1 bis 3, **dadurch gekennzeichnet, dass** die Beschichtungsmasse als weiteren Bestandteil der Komponente A a9) 2,5 bis 6,5 Gew.-% Pigmente und/oder Füllstoffe enthält.

5. Radsätze oder deren Teile nach Anspruch 1 bis 4, **dadurch gekennzeichnet, dass** die Beschichtungsmasse als weiteren Bestandteil der Komponente A a10) 2 bis 2,5 Gew.-% Entschäumer und/oder Verlaufshilfsmittel enthält.

6. Radsätze oder deren Teile nach Anspruch 1 bis 5, **dadurch gekennzeichnet, dass** die Komponente B) 2,4- und/oder 4,4-Diphenylmethandiisocyanat enthält.

7. Radsätze oder deren Teile nach Anspruch 1 bis 6, **dadurch gekennzeichnet, dass** der Katalysator a6) Dibutylzinndilaurat ist.

8. Verfahren zum Beschichten von Radsätzen oder deren Teilen durch Aufbringen und Härten einer 2-Komponenten-Polyurethanbeschichtungsmasse, **dadurch gekennzeichnet, dass** die Beschichtungsmasse folgende Bestandteile enthält:
Komponente A, enthaltend
a1) 18 bis 30 Gew.-% eines Polyetherpolyols mit einer nach ASTM D1209 bestimmten Hydroxylzahl von 300 bis 500 mg KOH/g,
a2) 38 bis 60 Gew.-% Rizinusöl,
a3) 0,6 bis 2,0 Gew.-% mindestens eines Di- oder Polyamins,
a4) 5,6 bis 9,0 Gew.-% Trizinkbis(orthophosphat),
a5) 2,2 bis 3,5 Gew.-% Zinkoxid und/oder Zinkphosphat,
a6) 0,05 bis 0,4 Gew.-% eines die Urethanbildung katalysierenden Katalysators,
wobei die gewichtsprozentualen Angaben auf die Gesamtmasse der Beschichtungsmasse bezogen sind, und
als Komponente B ein oder mehrere Di- und/oder Polyisocyanate in einer Menge, die einem Molverhältnis der Isocyanat-Gruppen zu den Hydroxylgruppen der Bestandteile a1) und a2) von 0,6:1 bis 1,2:1 entspricht.

9. Verfahren nach Anspruch 8, **dadurch gekennzeichnet, dass** die Beschichtungsmasse als weiteren Bestandteil der Komponente A
a7) 14,5 bis 17,5 Gew.-% eines Copolymerisats ungesättigter aromatischer C₉/C₁₀-Kohlenwasserstoffe mit Phenol enthält.

10. Verfahren nach Anspruch 8 oder 9, **dadurch gekennzeichnet, dass** die Beschichtungsmasse als weiteren Bestandteil der Komponente A
a8) 3,5 bis 6,5 Gew.-% Zeolit enthält.

11. Verfahren nach Anspruch 8 bis 10, **dadurch gekennzeichnet, dass** die Beschichtungsmasse als weiteren Bestandteil der Komponente A a9) 2,5 bis 6,5 Gew.-% Pigmente und/oder Füllstoffe enthält.

12. Verfahren nach Anspruch 8 bis 11, **dadurch gekennzeichnet, dass** die Beschichtungsmasse als weiteren Bestandteil der Komponente A a10) 2 bis 2,5 Gew.-% Entschäumer und/oder Verlaufshilfsmittel enthält.

13. Verfahren nach Anspruch 8 bis 12, **dadurch gekennzeichnet, dass** die Komponente B) 2,4- und/oder 4,4-Diphenylmethandiisocyanat enthält oder daraus besteht.

14. Verfahren nach Anspruch 8 bis 13, **dadurch gekennzeichnet, dass** der Katalysator a6) Dibutylzinndilaurat ist.

15. Verfahren nach einem der Ansprüche 8 bis 14, **dadurch gekennzeichnet, dass** man auf die metallische Oberfläche vor Auftragen der Beschichtungsmasse mindestens eine Haftgrundierung aufträgt.

## Claims

1. Wheelsets provided with a cured coating produced from a 2-component polyurethane coating material for trackbound vehicles or parts of these, **characterized in that** the coating has been produced via application and curing of a coating composition which comprises the following constituents:
component A comprising
a1) from 18 to 30% by weight of a polyether polyol with a hydroxy number of from 300 to 500 mg KOH/g, determined to ASTM D1209,
a2) from 38 to 60% by weight of castor oil,
a3) from 0.6 to 2.0% by weight of at least one di- or polyamine,
a4) from 5.6 to 9.0% by weight of trizinc bis(orthophosphate),
a5) from 2.2 to 3.5% by weight of zinc oxide and/or zinc phosphate,
a6) from 0.05 to 0.4% by weight of a catalyst which catalyzes urethane formation, where the percentage by weight data are based on the total mass of the coating composition, and
as component B, one or more di- and/or polyisocyanates in an amount which corresponds to a molar ratio of from 0.6:1 to 1.2:1 of the isocyanate groups to the hydroxy groups of the constituents a1) and a2).

2. Wheelsets or parts of these according to Claim 1, **characterized in that** the coating composition comprises, as further constituent of component A,
a7) from 14.5 to 17.5% by weight of a copolymer of unsaturated aromatic C₉/C₁₀-hydrocarbons with phenol.

3. Wheelsets or parts of these according to Claim 1 or 2, **characterized in that** the coating composition comprises, as further constituent of component A,
a8) from 3.5 to 6.5% by weight of zeolite.

4. Wheelsets or parts of these according to any of Claims 1 to 3, **characterized in that** the coating composition comprises, as further constituent of component A,
a9) from 2.5 to 6.5% by weight of pigments and/or fillers.

5. Wheelsets or parts of these according to any of Claims 1 to 4, **characterized in that** the coating composition comprises, as further constituent of component A,
a10) from 2 to 2.5% by weight of antifoam and/or leveling assistant.

6. Wheelsets or parts of these according to any of Claims 1 to 5, **characterized in that** component B) comprises diphenylmethane 2,4- and/or 4,4-diisocyanate.

7. Wheelsets or parts of these according to any of Claims 1 to 6, **characterized in that** the catalyst a6) is dibutyltin dilaurate.

8. Process for coating wheelsets or parts thereof via application and curing of a 2-component polyurethane coating composition, **characterized in that** the coating composition comprises the following constituents:
component A comprising
a1) from 18 to 30% by weight of a polyether polyol with a hydroxy number of from 300 to 500 mg KOH/g, determined to ASTM D1209,
a2) from 38 to 60% by weight of castor oil,
a3) from 0.6 to 2.0% by weight of at least one di- or polyamine,
a4) from 5.6 to 9.0% by weight of trizinc bis(orthophosphate),
a5) from 2.2 to 3.5% by weight of zinc oxide and/or zinc phosphate,
a6) from 0.05 to 0.4% by weight of a catalyst which catalyzes urethane formation, where the percentage by weight data are based on the total mass of the coating composition, and
as component B, one or more di- and/or polyisocyanates in an amount which corresponds to a molar ratio of from 0.6:1 to 1.2:1 of the isocyanate groups to the hydroxy groups of the constituents a1) and a2).

9. Process according to Claim 8, **characterized in that** the coating composition comprises, as further constituent of component A
a7) from 14.5 to 17.5% by weight of a copolymer of unsaturated aromatic C₉/C₁₀-hydrocarbons with phenol.

10. Process according to Claim 8 or 9, **characterized in that** the coating composition comprises, as further constituent of component A,
a8) from 3.5 to 6.5% by weight of zeolite.

11. Process according to any of Claims 8 to 10, **characterized in that** the coating composition comprises, as further constituent of component A,
a9) from 2.5 to 6.5% by weight of pigments and/or fillers.

12. Process according to any of Claims 8 to 11, **characterized in that** the coating composition comprises, as further constituent of component A,
a10) from 2 to 2.5% by weight of antifoam and/or leveling assistant.

13. Process according to any of Claims 8 to 12, **characterized in that** component B) comprises, or consists of, diphenylmethane 2,4- and/or 4,4-diisocyanate.

14. Process according to any of Claims 8 to 13, **characterized in that** the catalyst a6) is dibutyltin dilaurate.

15. Process according to any of Claims 8 to 14, **characterized in that** at least one adhesion primer is applied to the metal surface before the coating composition is applied.

## Revendications

1. Trains de roues pourvus d'un revêtement réalisé à l'aide d'un matériau de revêtement durci en polyuréthane à 2 composants pour des véhicules liés au rail ou leurs pièces, **caractérisé en ce que** le revêtement a été réalisé par application et durcissement d'une masse de revêtement contenant les constituants suivants :
composant A, contenant
a1) 18 à 30% en poids d'un polyétherpolyol présentant un indice d'hydroxyle déterminé selon la norme ASTM D1209 de 300 à 500 mg de KOH/g,
a2) 38 à 60% en poids d'huile de ricin,
a3) 0,6 à 2,0% en poids d'au moins une diamine ou polyamine,
a4) 5,6 à 9,0% en poids de bis (orthophosphate) trizincique,
a5) 2,2 à 3,5% en poids d'oxyde de zinc et/ou de phosphate de zinc,
a6) 0,05 à 0,4% en poids d'un catalyseur catalysant la formation d'uréthane,
les indications de pourcentage en poids se rapportant à la masse totale de la masse de revêtement et
comme composant B, un ou plusieurs diisocyanates et/ou polyisocyanates en une quantité qui correspond à un rapport molaire des groupes isocyanate aux groupes hydroxyle des constituants a1) et a2) de 0,6:1 à 1,2:1.

2. Trains de roues ou leurs pièces selon la revendication 1, **caractérisés en ce que** la masse de revêtement contient comme autre constituant du composant A
a7) 14,5 à 17,5% en poids d'un copolymère d'hydrocarbures en C₉/C₁₀ insaturés aromatiques avec du phénol.

3. Trains de roues ou leurs pièces selon la revendication 1 ou 2, **caractérisés en ce que** la masse de revêtement contient comme autre constituant du composant A
a8) 3,5 à 6,5% en poids de zéolithe.

4. Trains de roues ou leurs pièces selon la revendication 1 à 3, **caractérisés en ce que** la masse de revêtement contient comme autre constituant du composant A
a9) 2,5 à 6,5% en poids de pigments et/ou de charges.

5. Trains de roues ou leurs pièces selon la revendication 1 à 4, **caractérisés en ce que** la masse de revêtement contient comme autre constituant du composant A
a10) 2 à 2,5% en poids d'antimousse et/ou d'adjuvant d'étalement.

6. Trains de roues ou leurs pièces selon la revendication 1 à 5, **caractérisés en ce que** le composant B) contient du diisocyanate de 2,4-diphénylméthane et/ou de 4,4-diphénylméthane.

7. Trains de roues ou leurs pièces selon la revendication 1 à 6, **caractérisés en ce que** le catalyseur a6) est le dilaurate de dibutylétain.

8. Procédé de revêtement de trains de roues ou de leurs pièces par application et durcissement d'une masse de revêtement en polyuréthane à 2 composants, **caractérisé en ce que** la masse de revêtement contient les constituants suivants :
composant A, contenant
a1) 18 à 30% en poids d'un polyétherpolyol présentant un indice d'hydroxyle déterminé selon la norme ASTM D1209 de 300 à 500 mg de KOH/g,
a2) 38 à 60% en poids d'huile de ricin,
a3) 0,6 à 2,0% en poids d'au moins une diamine ou polyamine,
a4) 5,6 à 9,0% en poids de bis (orthophosphate) trizincique,
a5) 2,2 à 3,5% en poids d'oxyde de zinc et/ou de phosphate de zinc,
a6) 0,05 à 0,4% en poids d'un catalyseur catalysant la formation d'uréthane,
les indications de pourcentage en poids se rapportant à la masse totale de la masse de revêtement et
comme composant B, un ou plusieurs diisocyanates et/ou polyisocyanates en une quantité qui correspond à un rapport molaire des groupes isocyanate aux groupes hydroxyle des constituants a1) et a2) de 0,6:1 à 1,2:1.

9. Procédé selon la revendication 8, **caractérisé en ce que** la masse de revêtement contient comme autre constituant du composant A
a7) 14,5 à 17,5% en poids d'un copolymère d'hydrocarbures en C₉/C₁₀ insaturés aromatiques avec du phénol.

10. Procédé selon la revendication 8 ou 9, **caractérisé en ce que** la masse de revêtement contient comme autre constituant du composant A
a8) 3,5 à 6,5% en poids de zéolithe.

11. Procédé selon la revendication 8 à 10, **caractérisé en ce que** la masse de revêtement contient comme autre constituant du composant A
a9) 2,5 à 6,5% en poids de pigments et/ou de charges.

12. Procédé selon la revendication 8 à 11, **caractérisé en ce que** la masse de revêtement contient comme autre constituant du composant A
a10) 2 à 2,5 % en poids d'antimousse et/ou d'adjuvant d'étalement.

13. Procédé selon la revendication 8 à 12, **caractérisé en ce que** le composant B) contient du diisocyanate de 2,4-diphénylméthane et/ou de 4,4-diphénylméthane ou est constitué par ceux-ci.

14. Procédé selon la revendication 8 à 13, **caractérisé en ce que** le catalyseur a6) est le dilaurate de dibutylétain.

15. Procédé selon l'une quelconque des revendications 8 à 14, **caractérisé en ce qu'**on applique sur la surface métallique, avant l'application de la masse de revêtement, au moins un apprêt d'adhérence.
